# EUROPEAN PATENT SPECIFICATION

(11) **EP 2 013 454 B1**
(45) Date of publication and mention of the grant of the patent: **21.07.2010**
(21) Application number: 07742856.3
(22) Date of filing: 26.04.2007
(51) Int. Cl.: F01N 3/08, F01N 3/36, F01N 9/00, F01N 3/025

(54) **EXHAUST GAS PURIFICATION APPARATUS FOR AN INTERNAL COMBUSTION ENGINE**
ABGASREINIGUNGSVORRICHTUNG FÜR EINEN VERBRENNUNGSMOTOR
ÉPURATEUR DES GAZ D'ÉCHAPPEMENT POUR MOTEUR À COMBUSTION INTERNE

(30) Priority: 26.04.2006 JP 2006121613
(43) Date of publication of application: 14.01.2009
(73) Proprietor: Toyota Jidosha Kabushiki Kaisha, Toyota-shi, Aichi 471-8571 (JP)
(72) Inventor: OGAWA, Takashi, Aichi 471-8571 (JP)
(74) Representative: Kuhnen & Wacker
(86) International application number: PCT/JP2007/059421
(87) International publication number: WO 2007/126131

(56) References cited:
- EP-A- 1 149 991
- WO-A-2007/042693
- DE-A1- 10 124 596
- JP-A- 8 232 743
- JP-A- 2002 038 939
- JP-A- 2004 232 487
- JP-A- 2007 023 807

## Description

### TECHNICAL FIELD

The present invention relates to an exhaust gas purification apparatus for an internal combustion engine that serves to add a reducing agent to an exhaust gas.

### BACKGROUND ARTS

Japanese patent application laid-open No. 2004-143988 discloses, as a technique to add a reducing agent to an exhaust gas, one in which an exhaust gas temperature sensor is arranged between an oxidation catalyst disposed in an exhaust passage and a particulate filter disposed immediately downstream of the oxidation catalyst, so that the reducing agent is added to the exhaust gas based on the temperature of the exhaust gas detected by the exhaust gas temperature sensor. Also, Japanese patent application laid-open No. 2004-44515 discloses a technique in which when temperature raising control is performed by controlling the addition of a reducing agent by a reducing agent addition unit based on the temperature of an exhaust gas detected by a temperature detecting unit arranged downstream of two purification units, a flow rate Q of the exhaust gas passing through two purification units is estimated or detected, and the temperature raising control on the purification units is not started when the above-mentioned flow rate Q is equal to or less than a predetermined amount CQ at the time of starting the temperature raising control. In addition, Japanese patent application laid-open No. 2005-120938 discloses a technique in which when the processing of purifying a NOx catalyst is carried out by releasing and reducing NOx held in the NOx catalyst, light oil is injected into an exhaust gas by an addition valve so that the light oil is supplied to the NOx catalyst together with the exhaust gas, and after the droplet-like light oil adheres to the entire area of the NOx catalyst, the flow rate of the exhaust gas is decreased.

JP 2002 038939 A discloses an exhaust gas purification apparatus for an internal combustion engine having a reducing agent addition unit that adds a reducing agent to an exhaust gas upstream of an exhaust gas purification unit arranged in an exhaust passage of said internal combustion engine. An estimation unit estimates a flow speed or temperature of the exhaust gas passing a reducing agent addition position and an addition control unit adjusts an amount of addition of said reducing agent based on the flow speed or temperature of the exhaust gas estimated by the estimation unit.

DE 101 24 596 A1 relates to an apparatus and method for estimating an exhaust temperature of an internal combustion engine. A pressure sensor detects an internal pressure in a cylinder of the internal combustion engine. The exhaust temperature is estimated based on said detected internal pressure.

### DISCLOSURE OF THE INVENTION

Here, note that the flow rate or speed and the temperature of the exhaust gas passing the position of addition of the reducing agent in the exhaust passage might fluctuate to a great extent in each cylinder or cycle in accordance with a change in the operating state of the internal combustion engine.

However, there occurs a response delay by the time the change in the exhaust gas temperature is reflected on measurements of the exhaust gas temperature sensor. so there will be a possibility that the exhaust gas temperature sensor can not catch a steep temperature variation in each cylinder or cycle as stated above. Accordingly, in the above-mentioned conventional technique, the reducing agent can not occasionally be added in an appropriate manner.

The object of the present invention is to provide a technique which is capable of performing the addition of a reducing agent in a more appropriate manner in an exhaust gas purification apparatus for an internal combustion engine including a reducing agent addition unit for adding the reducing agent to an exhaust gas flowing in an exhaust passage of the internal combustion engine.

In the present invention, the following construction is adopted. That is, the present invention resides in an exhaust gas purification apparatus for an internal combustion engine having a reducing agent addition unit that adds a reducing agent to an exhaust gas upstream of an exhaust gas purification unit arranged in an exhaust passage of said internal combustion engine,
said exhaust gas purification apparatus being characterized by comprising:
a cylinder internal pressure detection unit that detects an internal pressure in a cylinder of said internal combustion engine when an exhaust valve for the cylinder is opened;
an estimation unit that estimates a flow speed or temperature of the exhaust gas passing a reducing agent addition position of said reducing agent addition unit in said exhaust passage based on the cylinder internal pressure detected by said cylinder internal pressure detection unit; and
an addition control unit that adjusts an amount of addition of the reducing agent based on the flow speed or temperature of the exhaust gas estimated by said estimation unit

The flow speed and the temperature of the exhaust gas passing the reducing agent addition position might change or fluctuate to a great extent in each cylinder or cycle of the internal combustion engine. Thus, it has been difficult to detect a steep change as stated above immediately with the use of a sensor having a low response as an exhaust gas temperature sensor.

In contrast to this, the flow speed and the temperature of the exhaust gas discharged on an exhaust stroke of the cylinder correlate to the cylinder internal pressure (the pressure in the cylinder) when the exhaust valve is opened, so the flow speed and the temperature of the exhaust gas can be specified (estimated) immediately by measuring the cylinder internal pressure upon opening of the exhaust valve for the cylinder.

Accordingly, the exhaust gas purification apparatus for an internal combustion engine of the present invention estimates the flow speed or the temperature of the exhaust gas passing the reducing agent addition position based on the cylinder internal pressure upon opening of the exhaust valve, and adjusts the amount of addition of the reducing agent based on the estimated flow speed or temperature of the exhaust gas.

According to this, even when the flow speed and the temperature of the exhaust gas passing the reducing agent addition position differ to a great extent among individual cylinders or individual cycles, it is possible to immediately estimate the flow speed or the temperature of the exhaust gas at the time when the exhaust gas discharged from each cylinder passes the reducing agent addition position, or the flow speed or the temperature of the exhaust gas at the time when the exhaust gas discharged from each cylinder on an exhaust stroke of each cycle passes the reducing agent addition position. When the amount of addition of the reducing agent is adjusted in accordance with the flow speed or the temperature of the exhaust gas estimated in this manner, the amount of addition of the reducing agent becomes appropriate for the flow speed or the temperature of the exhaust gas, so the addition of the reducing agent can be performed in a more appropriate manner.

Here, note that the flow speed and the temperature of the exhaust gas tend to become higher in accordance with the increasing cylinder internal pressure upon opening of the exhaust valve, so the estimation unit of the present invention can estimate that the higher the cylinder internal pressure detected by the cylinder internal pressure detection unit, the higher the flow speed or temperature of the exhaust gas passing the reducing agent addition position becomes. As a consequence of this, the addition control unit may increase the amount of addition of the reducing agent in accordance with the higher flow speed or temperature of the exhaust gas estimated by the estimation unit.

For example, when the amount of addition of the reducing agent is increased in accordance with the increasing flow speed of the exhaust gas estimated by the estimation unit, the amount of the reducing agent with respect to the flow rate or amount of the exhaust gas can be maintained to a desired ratio. Accordingly, it becomes easy to make the air-fuel ratio of the exhaust gas converge into a target air-fuel ratio by adding the reducing agent to the exhaust gas.

In addition, when the amount of addition of the reducing agent is increased in accordance with the higher temperature of the exhaust gas estimated by the estimation unit, it is possible to add a maximum amount of reducing agent that can be vaporized with respect to the temperature of the exhaust gas. Thus, it becomes easy to raise the temperature of the exhaust gas purification unit at an early time by using the oxidation heat of the reducing agent.

Here, note that the estimation unit estimates timing at which the flow speed of the exhaust gas discharged per one exhaust stroke period becomes maximum, and the addition control unit adjusts the timing of addition of the reducing agent based on the timing estimated by the estimation unit. As a result, the timing of the reducing agent addition becomes appropriate for the flow speed or temperature of the exhaust gas, thus making it possible to perform the addition of the reducing agent in a more appropriate manner.

The above and other objects, features and advantages of the present invention will become more readily apparent to those skilled in the art from the following detailed description of preferred embodiments of the present invention taken in conjunction with the accompanying drawings.

### BRIEF DESCRIPTION OF THE DRAWINGS

Fig. 1 illustrates the schematic construction of an internal combustion engine with an intake system and an exhaust system to which an exhaust gas purification apparatus for an internal combustion engine according to an embodiment of the present invention is applied.
Fig. 2 is a flow chart illustrating a control routine in fuel addition control.
Fig. 3 is a view showing cylinder internal pressure, the flow speed and the temperature of an exhaust gas, and the state of fuel addition associated with the fuel addition control.

### DESCRIPTION OF THE PREFERRED EMBODIMENT

Hereinafter, reference will be made to a specific embodiment of the present invention.

### < FIRST EMBODIMENT >

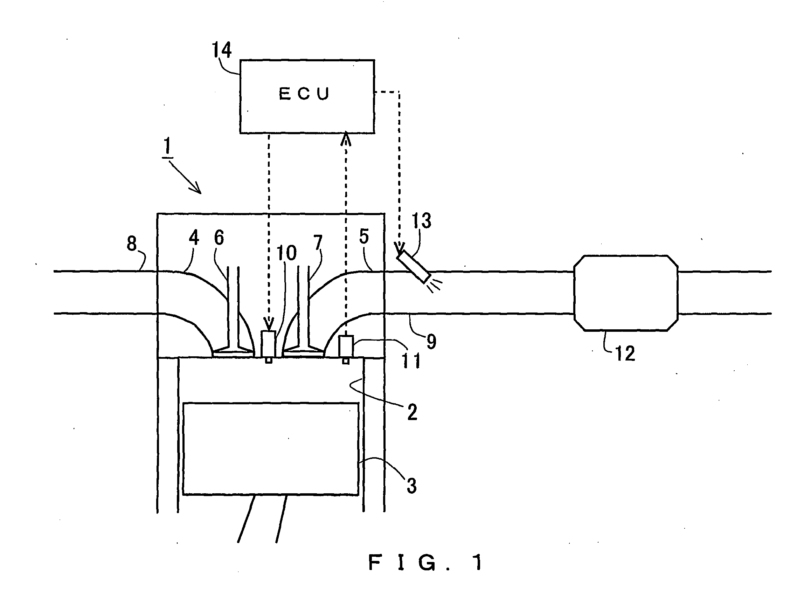

Fig. 1 illustrates the schematic construction of an internal combustion engine with its intake system and exhaust system to which an exhaust gas purification apparatus according to a first embodiment of the present invention is applied.

The internal combustion engine 1 as shown in Fig. 1 is a water-cooled four-stroke cycle diesel engine having four cylinders 2. A piston 3 is slidably fitted in each cylinder 2 of the internal combustion engine 1.

An intake port 4 and an exhaust port 5 are connected with a combustion chamber defined in each cylinder 2 at an upper portion thereof. The intake port 4 and the exhaust port 5 have their opening portions into the combustion chamber adapted to be opened and closed by an intake valve 6 and an exhaust valve 7, respectively. The intake port 4 and the exhaust port 5 are connected with an intake passage 8 and an exhaust passage 9, respectively.

In addition, on each cylinder 2, there is mounted a fuel injection valve 10 at a location right above the cylinder 2 for directly injecting fuel into the corresponding cylinder 2. Also, on each cylinder 2 at an ascending location thereof, there is mounted a cylinder internal pressure sensor 11 for detecting the internal pressure of the corresponding cylinder 2.

An exhaust passage 9 is connected at its downstream end with an unillustrated muffler. A filter 12 for purifying an exhaust gas discharged from each cylinder 2 of the internal combustion engine 1 is arranged in the exhaust passage 9. The filter 12 is a particulate filter that serves to collect PM (particulate matter) such as soot, etc., discharged from the internal combustion engine 1. An occlusion reduction type NOx catalyst (hereinafter referred to as a NOx catalyst) is supported by the filter 12. In addition, the filter 12 may be one having a NOx catalyst and a particulate filter arranged in series with each other, or another one having a plurality of NOx catalysts and particulate filters alternately arranged one over another. The filter 12 corresponds to an exhaust gas cleaning or purification unit of the present invention.

Also, a fuel addition valve 13 for supplying a reducing agent in the form of fuel to the exhaust gas passing through the exhaust passage 9 is mounted on the exhaust passage 9 at an upstream side of the filter 12. The fuel addition valve 13 corresponds to a reducing agent addition unit of the present invention.

An electronic control unit (ECU) 14 for controlling the internal combustion engine 1 is provided in conjunction with the internal combustion engine 1 as constructed in the above manner. The ECU 14 comprises a control computer comprising a CPU, a ROM, a RAM, a backup RAM, etc.

The ECU 14 is connected to the cylinder internal pressure sensors 11 through electrical wiring, so that output signals of the individual cylinder internal pressure sensors 11 are input to the ECU 14. Also, the ECU 14 is connected to the fuel injection valves 10 and the fuel addition valve 13 through electrical wiring, so that the opening and closing timing of the fuel injection valves 10 and the fuel addition valve 13 can be controlled by the ECU 14.

In a basic routine to be executed at regular intervals, the ECU 14 executes, for example, inputting of output signals from a variety of kinds of sensors as well as arithmetic calculations of the engine rotational speed, the amount of fuel to be supplied, and the fuel supply timing of fuel to be supplied, etc. The various kinds of signals input to the ECU 14 and various control values obtained by the calculations of the ECU 14 in the basic routine are temporarily stored in the RAM of the ECU 14.

Further, in such interrupt processing that is triggered by input of signals from the variety of sensors and switches, the elapse of a prescribed time, or input of a pulse signal from a crank position sensor, etc., the ECU 14 reads out various control values from the RAM, and controls the fuel injection valves 10 and the fuel addition valve 13 in accordance with the control values thus read out.

The ECU 14 executes fuel addition control such as NOx reduction processing, SOx poisoning recovery processing, PM oxidation removal processing, etc., so as to add fuel to the exhaust gas flowing form the fuel addition valve 13 into the filter 12 in accordance with an application program stored in the ROM.

Here, note that the NOx reduction processing is the processing that adds fuel from the fuel addition valve 13 to the exhaust gas to enrich the air-fuel ratio of the exhaust gas flowing into the filter 12, thereby releasing and reducing the NOx occluded in the NOx catalyst of the filter 12.

The SOx poisoning recovery processing is the processing that adds fuel from the fuel addition valve 13 to the exhaust gas to oxidize the added fuel in the NOx catalyst of the filter 12, whereby the temperature of the filter 12 is raised to 600 degrees C - 800 degrees C due to the heat accompanying the oxidation reaction, and at the same time, the air-fuel ratio of the exhaust gas flowing into the filter 12 is enriched, thereby releasing and reducing the SOx occluded in the NOx catalyst of the filter 12.

The PM oxidation removal processing is the processing that adds fuel from the fuel addition valve 13 to the exhaust gas to oxidize the added fuel in the NOx catalyst of the filter 12, whereby the temperature of the filter 12 is raised by the heat accompanying the oxidation reaction to oxidize and remove the PM collected in the filter 12.

Here, note that the flow speed and the temperature of the exhaust gas passing the position of addition of fuel from the fuel addition valve 13 in the exhaust passage 9 change to a great extent in each cylinder 2 of the internal combustion engine 1 in accordance with a change in the operating state of the internal combustion engine 1. In the fuel addition control, it is desired to add fuel in an amount and at timing of addition suitable for the flow speed and the temperature of the exhaust gas passing the position of addition of fuel from the fuel addition valve 13 in the exhaust passage 9.

Accordingly, in this embodiment, the flow speed and the temperature of the exhaust gas passing the position of addition of fuel is estimated based on the cylinder internal pressure, and the number or frequency of fuel addition and the timing of fuel addition from the fuel addition valve 13 are adjusted based on the flow speed and the temperature of the exhaust gas thus estimated.

According to this, it is possible to set the frequency and timing of addition of fuel suitable or appropriate for the estimated flow speed and temperature of the exhaust gas passing the position of addition of fuel, so the addition of fuel can be carried out in a more appropriate manner.

In the NOx reduction processing and the SOx poisoning recovery processing, the amount of fuel with respect to the flow rate of the exhaust gas can be maintained at a desired ratio. As a result, the air-fuel ratio of the exhaust gas can be lowered with a high degree of precision, whereby the air-fuel ratio of the exhaust gas is converged into a target air-fuel ratio in an easy manner. Thus, it is possible to suppress the air-fuel ratio of the exhaust gas from shifting to a lean side or a rich side with respect to the target air-fuel ratio, for example, even at the time of transient operation

In addition, in the SOx poisoning recovery processing and the PM oxidation removal processing, the temperature of the filter 12 can be raised to a target temperature by adding a maximum amount of fuel that can be vaporized. Accordingly, it is possible to facilitate to raise the temperature of the filter 12 at an early time by using the oxidation heat of fuel, and it is also possible to suppress insufficient vaporization of fuel and hence prevention of a temperature rise due to the addition of an excessively large amount of fuel, as well as the occurrence of filter clogging resulting from that fuel in a droplet state reaches the filter 12. In addition, it is further possible to suppress an insufficient temperature rise of the filter 12 resulting from the addition of an excessively small amount of fuel.

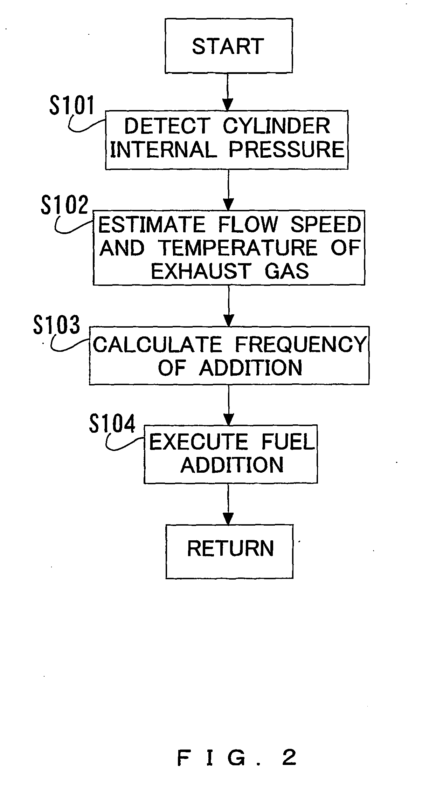

Here, reference will be made to a control routine for performing the fuel addition control according to this embodiment based on a flow chart shown in Fig. 2. Note that this routine is stored in the ECU 14 beforehand, and in this embodiment, the routine is executed in a periodic manner when the addition of fuel is executed at the time either of the cylinders 2 of the internal combustion engine 1 undergoes an exhaust stroke.

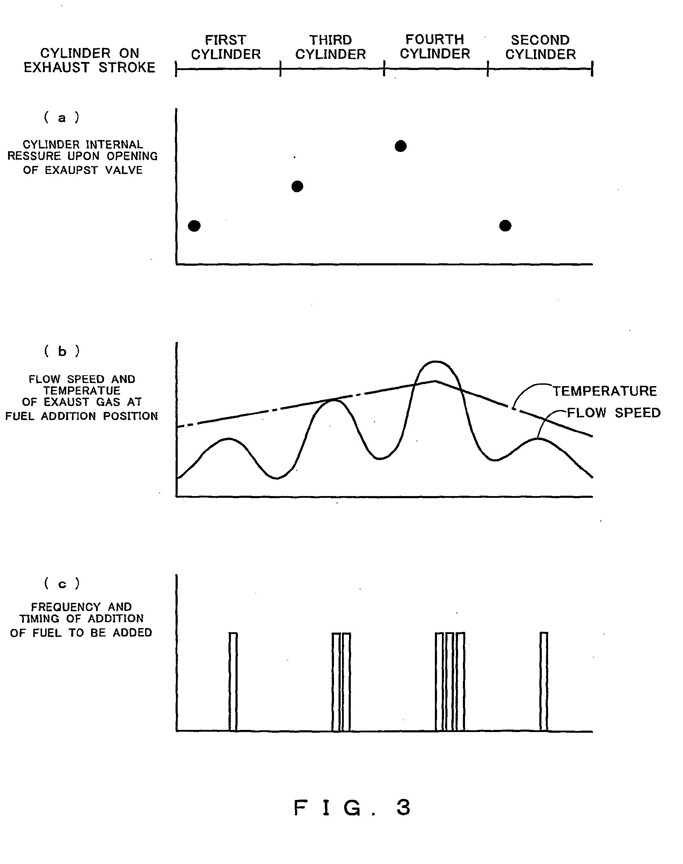

When a request for executing fuel addition control is made to start the processing of this routine, first in step S101, the ECU 14 detects the internal pressure of one predetermined cylinder 2, for which a relevant exhaust valve 7 is opened, by means of a cylinder internal pressure sensor 11 at the time of opening of the relevant exhaust valve 7 for the one predetermined cylinder 2, which undergoes an exhaust stroke in the current fuel addition control of the internal combustion engine 1. That is, as shown in Fig. 3(a), the cylinder internal pressure is detected at an instant immediately after the start of the exhaust stroke of the cylinder 2 for which the relevant exhaust valve 7 is opened. Here, note that the ECU 14 executing this step corresponds to a cylinder internal pressure detection unit of the present invention. Then, the control flow shifts to step S102.

In step S102, based on the internal pressure of a cylinder 2 for which the relevant exhaust valve 7 is opened and which is detected by the relevant cylinder internal pressure sensor 11, the ECU 14 estimates the flow speed and the temperature of the exhaust gas passing the position of addition of fuel from the fuel addition valve 13 in the exhaust passage 9 for the period of the exhaust stroke of the cylinder 2 for which the relevant exhaust valve 7 is opened. That is, as shown in Fig. 3(b), the flow speed of the exhaust gas, which changes in a convex curve, and the temperature of the exhaust gas, which changes in a straight line, are estimated in the period of the exhaust stroke of the cylinder 2 for which the relevant exhaust valve 7 is opened. Here, note that the ECU 14 executing this step corresponds to an estimation unit of the present invention.

The estimated flow speed and temperature of the exhaust gas is derived from a cylinder internal pressure map and the result of the last fuel addition control, and the higher the cylinder internal pressure, the greater the flow speed of the exhaust gas becomes, and the higher the temperature of the exhaust gas becomes. Specifically, the flow speed of the exhaust gas is estimated in such a manner that a basic convex curve-shaped variation or fluctuation of the flow speed in the period of the exhaust stroke of one of the cylinders 2 is derived from the cylinder internal pressure map, and a starting point of the current flow speed is connected with a termination point of the flow speed estimated in the last fuel addition control. Also, the temperature of the exhaust gas is estimated in such a manner that a first temperature of the exhaust gas at a time point when the flow speed of the exhaust gas in the current fuel addition control becomes maximum is derived from the cylinder internal pressure map, and the temperature of the exhaust gas changes linearly on a straight line connecting between the first temperature and a second temperature of the exhaust gas at a time point when the flow speed of the exhaust gas in the last fuel addition control became maximum. Thereafter, the control flow shifts to step S103.

In step S103, the ECU 14 calculates, based on the estimated flow speed and temperature of the exhaust gas, the frequency of addition of fuel from the fuel addition valve 13 for the period of the exhaust stroke of the cylinder 2 for which the relevant exhaust valve 7 is opened. The frequency of fuel addition thus calculated is derived from a map, which has the flow speed and the temperature of the exhaust gas as parameters, so as to provide an optimal amount of fuel addition, and the higher the flow speed and the temperature of the exhaust gas, the greater the frequency of fuel addition becomes, as shown in Fig. 3(c). Here, note that the ECU 14 executing this step corresponds to an addition control unit of the present invention. Then, the control flow shifts to step S104.

In step S104, the ECU 14 adds fuel from the fuel addition valve 13 to the exhaust gas at the frequency of fuel addition calculated in step S103.

Here, note that the timing of fuel addition is set to the time of starting the addition of fuel immediately after the flow speed of the exhaust gas changing in a convex curved manner, which was estimated in step S102, becomes maximum, as shown in Fig. 3(b) and (c), in such a manner that the fuel to be added reaches the filter 12 at an optimal time while being entrained in the exhaust gas. Thereafter, the processing of this routine is once terminated.

In fuel addition control thereafter, the processing of this routine is performed upon each execution of such control.

By executing the above-mentioned routine in this manner, it is possible to set the frequency and timing of addition of fuel in an optimal manner in accordance with the estimated flow speed and temperature of the exhaust gas passing the position of addition of fuel in fuel addition control, so the addition of fuel into the exhaust gas can be carried out in a more appropriate manner.

Here, note that in the above-mentioned embodiment, an optimal amount of fuel is added by increasing and decreasing the frequency of addition of fuel, but the present invention is not limited to this, and an optimal amount of fuel may be added by changing the duration of opening of the fuel addition valve 13 thereby to change the time or duration of fuel addition, or by changing the fuel addition pressure of the fuel addition valve 13 thereby to change the amount of fuel to be added per unit time.

In addition, in the above-mentioned embodiment, the time of fuel addition is uniquely decided as a time when the addition of fuel is started immediately after the estimated flow speed of the exhaust gas becomes maximum. However, the present invention is not limited to this, and the time of fuel addition may be appropriately changed in consideration of the flow speed and the temperature of the exhaust gas.

The exhaust gas purification apparatus according to the present invention is not limited to the above-mentioned embodiment, but various changes may be made therein in the range not departing from the spirit of the present invention.

While the invention has been described in terms of preferred embodiments, those skilled in the art will recognize that the invention can be practiced with modifications within the scope of the appended claims.

### INDUSTRIAL APPLICABILITY

According to the present invention, in an exhaust gas purification apparatus for an internal combustion engine, it is possible to perform the addition of a reducing agent in a more appropriate manner.

## Claims

1. An exhaust gas purification apparatus for an internal combustion engine having a reducing agent addition unit that is mounted on an exhaust passage of said internal combustion engine and adds a reducing agent to an exhaust gas upstream of an exhaust gas purification unit arranged in said exhaust passage, said apparatus comprising:
a cylinder internal pressure detection unit that detects an internal pressure in a cylinder of said internal combustion engine upon opening of an exhaust valve for said cylinder;
an estimation unit that estimates a flow speed or temperature of said exhaust gas passing a reducing agent addition position of said reducing agent addition unit in said exhaust passage based on said cylinder internal pressure detected by said cylinder internal pressure detection unit; and
an addition control unit that adjusts an amount of addition of said reducing agent based on the flow speed or temperature of said exhaust gas estimated by said estimation unit,
wherein said estimation unit estimates timing at which the flow speed of said exhaust gas discharged per one exhaust stroke period becomes maximum; and
said addition control unit adjusts the timing of addition of said reducing agent based on said timing estimated by said estimation unit.

2. The exhaust gas purification apparatus for an internal combustion engine as set forth in claim 1, wherein
said estimation unit estimates that the higher said cylinder internal pressure detected by said cylinder internal pressure detection unit, the higher the flow speed or temperature of said exhaust gas becomes; and
said addition control unit increases the amount of addition of said reducing agent in accordance with the higher flow speed or temperature of said exhaust gas estimated by said estimation unit.

## Patentansprüche

1. Abgasreinigungsvorrichtung für einen Verbrennungsmotor, die eine an einer Abgasleitung des Verbrennungsmotors installierte Reduktionsmittel-Zugabeeinheit aufweist, die einem Abgas stromaufwärts von einer in der Abgasleitung angeordneen Abgasreinigungseinheit ein Reduktionsmittel zusetzt, wobei die Vorrichtung aufweist:
eine Zylinderinnendruck-Erfassungseinheit, die beim Öffnen eines Abgasventils für einen Zylinder des Verbrennungsmotors einen Innendruck des Zylinders erfasst;
eine Schätzeinheit, die auf Basis des Zylinderinnendrucks, der von der Zylinderinnendruck-Erfassungseinheit erfasst wird, eine Strömungsgeschwindigkeit oder eine Temperatur des Abgases schätzt, das an einer Reduktionsmittel-Zugabestelle der Reduktionsmittel-Zugabeeinheit in der Abgasleitung vorbei strömt; und
eine Zugabesteuerungseinheit, die eine Zugabemenge des Reduktionsmittels auf Basis der von der Schätzeinheit geschätzten Strömungsgeschwindigkeit oder Temperatur des Abgases anpasst,
wobei die Schätzeinheit den Zeitpunkt schätzt, zu dem die Strömungsgeschwindigkeit des pro Abgashubperiode ausgestoßenen Abgases am höchsten wird, und
wobei die Zugabesteuereinheit den Zeitpunkt für die Zugabe des Reduktionsmittels auf Basis des von der Schätzeinheit geschätzten Zeitpunkts anpasst.

2. Abgasreinigungsvorrichtung für einen Verbrennungsmotor nach Anspruch 1, wobei
die Schätzeinheit die Strömungsgeschwindigkeit oder die Temperatur des Abgases umso höher schätzt, je höher der von der Zylinderinnendruck-Erfassungseinheit erfasste Zylinderinnendruck ist; und
die Zugabesteuerungseinheit die Zugabemenge des Reduktionsmittels gemäß der von der Schätzeinheit geschätzten höheren Strömungsgeschwindigkeit oder Temperatur des Abgases anpasst.

## Revendications

1. Appareil de purification de gaz d'échappement pour un moteur à combustion interne ayant une unité d'ajout d'agent de réduction qui est montée sur un passage d'échappement dudit moteur à combustion interne et ajoute un agent de réduction à un gaz d'échappement en amont d'une unité de purification de gaz d'échappement agencée dans ledit passage d'échappement, ledit appareil comprenant :
une unité de détection de pression interne de cylindre qui détecte une pression interne dans un cylindre dudit moteur à combustion interne à l'ouverture d'une soupape d'échappement pour ledit cylindre ;
une unité d'estimation qui estime une vitesse d'écoulement ou une température dudit gaz d'échappement passant par une position d'ajout d'agent de réduction de ladite unité d'ajout d'agent de réduction dans ledit passage d'échappement sur la base de ladite pression interne de cylindre détectée par ladite unité de détection de pression interne de cylindre ; et
une unité de commande d'ajout qui ajuste une quantité d'ajout dudit agent de réduction sur la base de la vitesse d'écoulement ou de la température dudit gaz d'échappement estimée par ladite unité d'estimation,
dans lequel ladite unité d'estimation estime un instant auquel la vitesse d'écoulement dudit gaz d'échappement déchargé par période de course d'échappement devient maximum ; et
ladite unité de commande d'ajout ajuste l'instant d'ajout dudit agent de réduction sur la base dudit instant estimé par ladite unité d'estimation.

2. Appareil de purification de gaz d'échappement pour un moteur à combustion interne selon la revendication 1, dans lequel
ladite unité d'estimation estime que plus la pression interne de cylindre détectée par ladite unité de détection de pression interne de cylindre est élevée, plus la vitesse d'écoulement ou la température dudit gaz d'échappement devient élevée ; et
ladite unité de commande d'ajout augmente la quantité d'ajout dudit agent de réduction en fonction de la vitesse d'écoulement ou de la température plus élevée dudit gaz d'échappement estimée par ladite unité d'estimation.
